# EUROPÄISCHE PATENTANMELDUNG

(11) **EP 0 674 883 A2**
(43) Veröffentlichungstag der Anmeldung: **04.10.1995**
(21) Anmeldenummer: 95102364.7
(22) Anmeldetag: 20.02.1995
(51) Int. Cl.: A61C 1/14, A61C 3/06

(54) **Vorrichtung zum Befestigen eines zahnärztlichen Bearbeitungswerkzeuges an Hand- und/oder Winkelstücken**

(30) Priorität: 29.03.1994 DE 9405338 U
(71) Anmelder: Behr, Karl Dr., D-82223 Eichenau (DE); Schelling, Adolf, D-82275 Emmering (DE)
(72) Erfinder: Behr, Karl Dr., D-82223 Eichenau (DE); Schelling, Adolf, D-82275 Emmering (DE)
(74) Vertreter: Reinhard - Skuhra - Weise & Partner

(57) **Zusammenfassung**

Die Erfindung betrifft eine Vorrichtung zum Befestigen eines zahnärztlichen axial hin- und herzubewegenden Bearbeitungswerkzeugs, insbesondere eines Polierers und/oder eines diamantierten Feilenkörpers, in einer Einspannaufnahme eines Hand- und/oder Winkelstückes. Diese besteht aus einem Einspannschaft 10 mit einem freien Ende 16, einem Halteschaft 12 mit einem freien Ende und einem Befestigungsabschnitt, an dem das zahnärztliche Bearbeitungswerkzeug dreh- und schubfest befestigbar ist, und aus einer Einrichtung 11, die die freien Enden 16, 19 des Einspannschaftes 10 und des Haltesschaftes 12 drehbar miteinander verbindet.

## Beschreibung

Die Erfindung betrifft eine Vorrichtung zum Befestigen eines zahnärztlichen Bearbeitungswerkzeuges, insbesondere eines Polierers und/oder eines diamantierten Feilenkörpers, in einer Einspannaufnahme eines Hand- und/oder Winkelstücks.

Für die Oberflächenbearbeitung von Zähnen werden Polierer und diamantierte profilierte Feilenkörper eingesetzt. Diese Werkzeuge haben bisher entweder einen angeformten Einspannschaft oder werden an einem Einspannschaft starr befestigt, beispielsweise durch Festklemmen. Nach dem Einsetzen des Einspannschaftes in die Einspannaufnahme eines Handstücks oder eines Winkelstücks entsteht bei der Zahnoberflächenbearbeitung das Problem, daß das Bearbeitungswerkzeug, dem über die Einspannaufnahme eine hin und hergehende axial gerichtete Bewegung vermittelt wird, nicht in alle Außenkonturenbereiche des Zahnes gebracht werden kann, weil für das Bearbeitungswerkzeug keine Drehung in der Einspannaufnahme vorgesehen ist. Der Zahnarzt muß daher die Einspannaufnahme des Handstücks bzw. des Winkelstücks öffnen, den Einspannschaft herausnehmen und in einer neuen Winkelstellung wieder einspannen. Diese Handhabung ist nicht nur umständlich und lästig, sondern auch zeitaufwendig. Hinzu kommt, daß für die Öffnung von Einspannaufnahmen bei Hand- und Winkelstücken oft ein starker Federdruck überwunden werden muß, was einen großen Kraftaufwand erfordert, der auch Betätigungsknopfspuren an den Fingern hinterlassen kann.

Die Erfindung zielt demgemäß darauf ab, eine Vorrichtung der eingangs genannten Gattung verfügbar zu machen, die eine Zahnoberflächenkonturbearbeitung ohne Einspannungswechsel ermöglicht.

Erfindungsgemäß wird diese Aufgabe durch die im Anspruch 1 gekennzeichneten Merkmale gelöst. Bevorzugte Merkmale, die die Erfindung vorteilhaft weiterbilden, sind den nachgeordneten Patentansprüchen zu entnehmen.

Demgemäß schafft die Erfindung in vorteilhafter Weise eine Vorrichtung zum Befestigen eines zahnärztlichen axial hin- und herzubewegenden Bearbeitungswerkzeugs, insbesondere eines Polierers, eines diamantierten Feilenkörpers oder dergleichen, in einer Einspannaufnahme eines Hand- und/oder Winkelstücks, bestehend aus einem Einspannschaft mit einem freien Ende, einem Halteschaft mit einem freien Ende und einem Befestigungsabschnitt, an dem das zahnärztliche Bearbeitungswerkzeug dreh- und schubfest befestigbar ist, und aus einer Einrichtung, die die freien Enden des Einspannschaftes und des Halteschaftes drehbar miteinander verbindet.

Mit der erfindungsgemäßen Vorrichtung wird mit einer außerordentlich einfachen und preiswert gestaltbaren Konzeption ein Wechseln der Einspannstellung überflüssig gemacht. Das Bearbeitungswerkzeug kann sich bei der Oberflächenbearbeitung den jeweiligen Konturen problemlos und in idealer Weise derart anpassen, daß der gesamte Bearbeitungsvorgang bedeutend weniger Zeit benötigt und die Bearbeitung selbst stets mit günstigen Anlageverhältnissen zwischen Bearbeitungswerkzeug und Zahnoberfläche möglich ist.

Gemäß einer bevorzugten Ausgestaltung kann die Einrichtung an dem freien Ende des Einspannschaftes oder des Halteschaftes angeformt sein, wobei dann das andere freie Ende des Halteschafts bzw. des Einspannschaftes drehbar mit Axialspiel an oder in dieser Einrichtungsanformung gelagert ist.

Gemäß einer bevorzugten Alternative, die außerordentlich einfach herstellbar und montierbar ist, besteht die Einrichtung aus einem separaten Kupplungsstück, das an dem freien Ende des Einspannschaftes bzw. des Halteschaftes befestigt ist, und in dem das freie Ende des Halteschaftes bzw. des Einspannschaftes drehbar gelagert ist.

Günstig ist es für das sichere drehbare Lagern, insbesondere bei Arbeitsbeanspruchung, dann, wenn die Einrichtung für das drehbar gelagerte freie Ende des Halteschaftes bzw. des Einspannschaftes eine Stützführung aufweist.

Gemäß einer bevorzugten Ausgestaltung der Erfindung besteht das Kupplungsstück aus einer Büchse, vorzugsweise aus Messing, in der eine Sackbohrung für die Aufnahme des freien Endes des Durchmesser-größeren Einspannschaftes mit Preßpassung und eine koaxiale Durchgangsbohrung vergleichsweise kleineren Durchmessers für das drehbare Aufnehmen des freien Endes des Halteschaftes gebildet ist, wobei das freie Ende des Halteschaftes einen vergrößerten Durchmesserabschnitt aufweist, der zwischen dem Boden der Sackbohrung und dem eingesetzten Ende des Einspannschaftes mit Axialspiel drehbar gehalten ist.

Bevorzugt ist die Büchse etwa bis zu ihrer halben Länge mit der Sackbohrung versehen und weist vorzugsweise etwa bis zu ihrer halben Länge einen gleichbleibenden Außendurchmesser auf, der sich dann zu einem Stützführungsabschnitt mit konstantem Außendurchmesser verjüngt.

Die Büchse läßt sich außerordentlich einfach und preiswert als gedrehtes Teil herstellen und mit minimal erforderlichem Außendurchmesser so gestalten, daß sie sich der Form des Aufnahmeschaftes problemlos anpaßt.

Nachfolgend wird die Erfindung unter Bezugnahme auf die beigefügten Zeichnungen näher erläutert. Es zeigen:
- Fig. 1: eine Seitenansicht auf eine Einheit aus Einspannschaft, Kupplungsstück und Halteschaft; und
- Fig. 2: einen Schnitt entlang der Schnittlinie II-II durch Fig. 1.

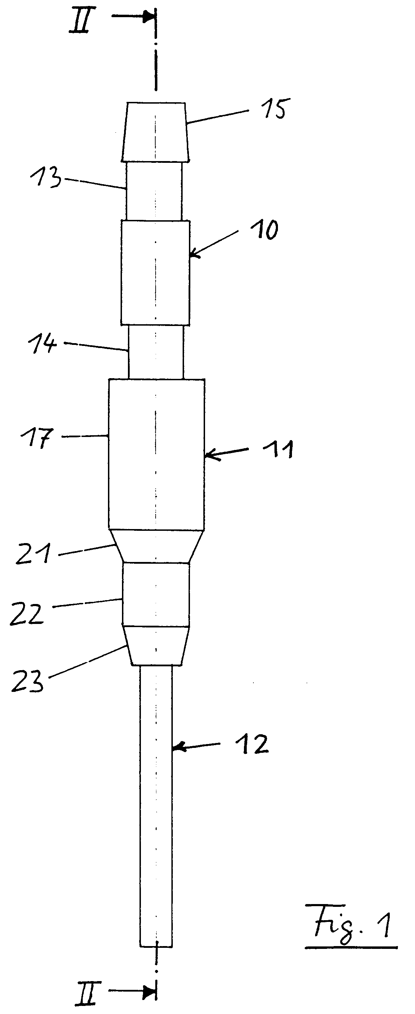

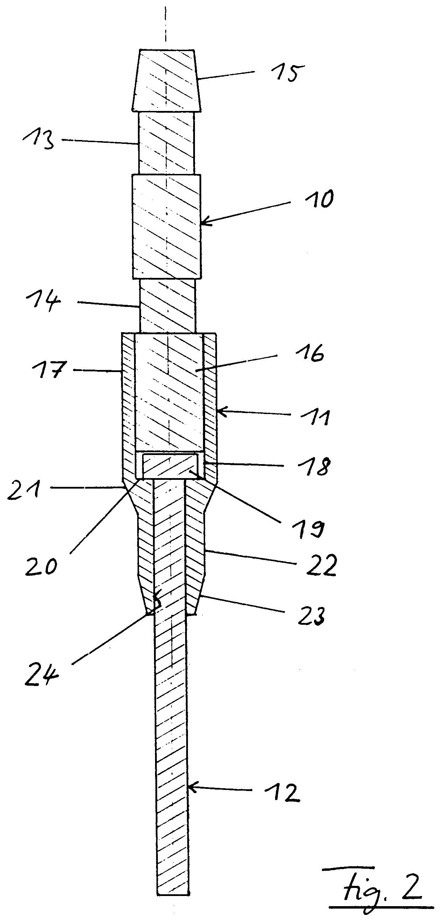

In Fig. 1 sind in einer Seitenansicht ein Einspannschaft 10, eine Kupplungsbüchse 11 und ein Halteschaft 12 dargestellt. Der Einspannschaft 10 ist zylinderförmig ausgebildet und besitzt im Durchmesser verringerte Abschnitte 13 und 14, die für den Eingriff einer üblichen Einspannaufnahme eines Hand- und oder Winkelstücks vorgesehen sind. In Fig. 1 besitzt der Einspannschaft 10 ein oberes konisch verjüngtes Einsetzende 15, das das Einführen in die Einspannaufnahme erleichtert. Das gegenüberliegende freie Ende 16 (vgl. Fig. 2) des Einspannschaftes 10 ist zylinderförmig mit demselben Außendurchmesser wie der Mittelteil des Einspannschaftes ausgebildet und in die Kupplungsbüchse 11 mit Preßpassung eingesetzt.

Die Kupplungsbüchse 11 besteht aus einem zylinderförmigen Einsetzabschnitt 17, in dem eine Sackbohrung 18 gebildet ist, in der das freie Ende 16 mit Preßpassung derart befestigt ist, daß das untere Ende der Sackbohrung 18 zur Aufnahme eines vergrößerten Durchmesserabschnitts 19 mit axialem Spiel freibleibt, welcher an dem freien Ende des Halteschafts 12 angeformt ist. Der vergrößerte Durchmesserabschnitt 19 ist in der Sackbohrung zwischen dem Boden 20 derselben und dem eingesetzten Ende des Einspannschaftes 10 mit Axialspiel drehbar gehalten.

An den zylinderförmigen Abschnitt 17 der Kupplungsbüchse 11 schließt sich etwa ab dem Boden 20 der Sackbohrung 18 ein konischer Reduktionsabschnitt 21 an, der zu einem Stützführungsabschnitt 22 mit konstantem Außendurchmesser führt, an welchen sich dann ein weiterer konischer Verjüngungsabschnitt 23 bis zum anderen Ende der Kupplungsbüchse 11 anschließt.

Koaxial zu der Sackbohrung 18 ist in die Kupplungsbüchse 11 eine Bohrung 24 eingebracht, die zentrisch durch den Stützführungsabschnitt 22 bis zum Boden der Sackbohrung 18 führt und in der der zylinderförmige Halteschaft 12 drehbar gelagert ist, vorzugsweise mit einer H⁷-Passung. Auf den Halteschaft 12 können in nicht dargestellter Weise zahnärztliche axial hin- und herbewegbare Bearbeitungswerkzeuge, wie Polierer, diamantierte Feilenkörper und dergleichen, beispielsweise durch Festklemmen so montiert werden, daß sie zusammen mit dem Halteschaft 12 relativ zu dem Einspannschaft 10 aufgrund der vorhandenen Kupplungsbüchse 11 drehbar sind.

Die Kupplungsbüchse 11 besteht aus einem gedrehten Teil, vorzugsweise aus Messing. Ihre Gesamtlänge beträgt etwa 9 mm. Der vergrößerte Durchmesserabschnitt 19 kann an dem Halteschaft 12 angeformt oder als separates Teil befestigt sein. Seine Gestaltung ist nicht auf die in Fig. 2 dargestellte Form beschränkt. Wesentlich ist nur, daß das freie Ende des Halteabschnitts 12 in der Kupplungsbüchse 11 drehbar, jedoch nicht über ein axiales Spiel hinaus axial verschiebbar gelagert ist.

## Patentansprüche

1. Vorrichtung zum Befestigen eines zahnärztlichen axial hin-und herzubewegenden Bearbeitungswerkzeugs, insbesondere eines Polierers und/oder eines diamantierten Feilenkörpers, in einer Einspannaufnahme eines Hand- und/oder Winkelstükkes, bestehend aus:
einem Einspannschaft (10) mit einem freien Ende (16),
einem Halteschaft (12) mit einem freien Ende und einem Befestigungsabschnitt, an dem das zahnärztliche Bearbeitungswerkzeug dreh- und schubfest befestigbar ist, und aus einer Einrichtung (11), die die freien Enden (16, 19) des Einspannschaftes (10) und des Haltesschaftes (12) drehbar miteinander verbindet.

2. Vorrichtung nach Anspruch 1, dadurch gekennzeichnet, daß die Einrichtung (11) an dem Einspannschaft oder dem Halteschaft angeformt ist.

3. Vorrichtung nach Anspruch 1, dadurch gekennzeichnet, daß die Einrichtung aus einem separaten Kupplungsstück (11) besteht, das an dem freien Ende (16, 19) des Einspannschaftes (10) bzw. des Halteschaftes (12) befestigt ist, und in dem das freie Ende (19, 16) des Halteschaftes (12) bzw. des Einspannschaftes (10) drehbar gelagert sind.

4. Vorrichtung nach einem der vorangehenden Ansprüche, dadurch gekennzeichnet, daß die Einrichtung (11) für das drehbar gelagerte freie Ende des Halteschaftes (12) bzw. des Einspannschaftes (10) einen Stützführungsabschnitt (22) aufweist.

5. Vorrichtung nach Anspruch 3 oder 4, dadurch gekennzeichnet, daß das Kupplungsstück aus einer Büchse (11) besteht, in der eine Sackbohrung (18) für die Aufnahme des freien Endes (16) des Durchmesser-größeren Einspannschaftes (10) mittels Preßpassung sowie eine koaxiale Durchgangsbohrung (24) vergleichsweise kleineren Durchmessers für das drehbare Aufnehmen des freien Endes des Halteschaftes (12) gebildet sind, wobei das freie Ende des Halteschaftes (12) einen vergrößerten Durchmesserabschnitt (19) aufweist, der zwischen dem Boden (20) der Sackbohrung (18) und dem eingesetzten Ende (16) des Einspannschaftes (10) mit Axialspiel drehbar gehalten ist.

6. Vorrichtung nach Anspruch 5, dadurch gekennzeichnet, daß die Büchse (11) etwa bis zu ihrer halben Länge mit der Sackbohrung (18) versehen ist.

7. Vorrichtung nach Anspruch 5 oder 6, dadurch gekennzeichnet, daß die Büchse (11) etwa bis zu ihrer halben Länge einen gleichbleibenden Außendurchmesserabschnitt (17) besitzt, der sich zu dem Stützführungsabschnitt (22) mit konstantem Außendurchmesser verjüngt.

8. Vorichtung nach einem der Ansprüche 5 bis 7, dadurch gekennzeichnet, daß die Büchse (11) aus einem gedrehten Teil besteht.

9. Vorrichtung nach einem der Ansprüche 5 bis 8, dadurch gekennzeichnet, daß die Büchse aus Messing besteht.
